# EUROPÄISCHE PATENTSCHRIFT

(11) **EP 2 358 568 B1**
(45) Veröffentlichungstag und Bekanntmachung des Hinweises auf die Patenterteilung: **12.11.2014**
(21) Anmeldenummer: 09756142.7
(22) Anmeldetag: 16.11.2009
(51) Int. Cl.: B60R 21/231

(54) **GASSACK**
AIRBAG
COUSSIN GONFLABLE

(30) Priorität: 19.11.2008 DE 102008057968
(43) Veröffentlichungstag der Anmeldung: 24.08.2011
(73) Patentinhaber: TRW Automotive GmbH, 73553 Alfdorf (DE)
(72) Erfinder: ARANZULLA, Daniele, 73457 Essingen (DE); BURKHARDTSMAIER, Martin, 73527 Schwaebisch Gmuend (DE); WERNER, Nico, 73540 Heubach (DE); PYS, Thomas, PL-42-200 Czestochowa (PL)
(74) Vertreter: Prehn, Manfred
(86) Internationale Anmeldenummer: PCT/EP2009/008147
(87) Internationale Veröffentlichungsnummer: WO 2010/057607

(56) Entgegenhaltungen:
- US-A- 5 529 340
- US-A1- 2002 020 998
- US-A1- 2006 214 405

## Beschreibung

Die Erfindung betrifft einen Gassack, insbesondere einen Beifahrer-Gassack, mit einem rückseitigen Einblasmund, einer Vorderwand zum Aufprall des Insassen, zwei gegenüberliegenden Seitenwänden sowie einer oberen und einer unteren Wand.

Bei Gassäcken kommen je nach Innenraumabmessungen und Kontur der angrenzenden Flächen (insbesondere der Instrumententafel) Gassäcke mit verschiedenen Eigenschaften zum Einsatz. Bei sehr ebenen Flächen und einfachen Konturen werden die günstiger herzustellenden, so genannten zweidimensionalen Gassäcke eingesetzt. Bei diesen Gassäcken ist es möglich, den Gassack aus einem einstückigen Gewebeteil herzustellen, welches dann zusammengelegt und an durch das Zusammenlegenden angrenzenden Rändern vernäht wird. Solche zweidimensionalen Gassäcke sind allerdings, wie bereits erwähnt, für eher einfachere Konturen geeignet. Wichtig ist beim Gassack, dass er sich beim Aufprall des Insassen an ein angrenzendes Fahrzeugteil anlegen und daran abstützen kann.

Darüber hinaus ist es wünschenswert, dass die Nähte thermisch nicht überlastet werden.

Im Folgenden ist der Begriff "Naht" vorzugsweise auf tatsächlich miteinander vernähte Ränder gerichtet, wobei dies aber nicht einschränkend ist, da es bereits miteinander verschweißte oder verklebte Nähte gibt und diese ebenfalls unter "Naht" zu verstehen sein sollen.

Ein Beispiel für einen so genannten zweidimensionalen Gassack gibt die US 5 316 337.

Darüber hinaus gibt es auch noch die so genannten dreidimensionalen Gassäcke, bei denen der Gassack eine im aufgeblasenen Zustand kompliziertere Außenkontur aufweist und aus mehreren miteinander vernähten Einzelteilen besteht, insbesondere aus zwei Seitenwänden und einem streifenförmigen, umlaufenden Mittelteil, welches die Seitenwände miteinander verbindet, sodass sich eine Art Rolle ergibt, die aber nicht kreiszylindrisch sein muss, sondern beliebige Formen aufweisen kann, abhängig von der Geometrie der Seitenwände. Solche dreidimensionalen Gassäcke sind schwieriger zu nähen, da die zu vernähenden Ränder nicht über einfaches Falten des Gassackgewebes übereinander liegen.

Aus der US 2002/020998 A1 ist ein Gassack, insbesondere ein Beifahrergassack, mit einem rückseitigen Einblasmund, einer Vorderwand zum Aufprall des Insassen, zwei gegenüberliegenden Seitenwänden sowie einer oberen und einer unteren Wand bekannt, wobei die obere und/oder die untere Wand jeweils zweigeteilt ist/sind. Die obere und untere Wand sind aus nebeneinander liegenden, längs gegenüberliegender Ränder miteinander verbundenen Seitenabschnitten gebildet, wobei die miteinander verbundenen Ränder der Seitenabschnitte linear verlaufen.

Die Erfindung schafft demgegenüber einen Gassack, insbesondere einen Beifahrer-Frontgassack, der sehr einfach und günstig herzustellen ist und der sich vor allem dadurch auszeichnet, dass seine Konstruktion sehr schnell an unterschiedliche Innenraumkonturen anpassbar ist. Diese Anpassbarkeit ist insbesondere bei Optimierungsversuchen für neue Fahrzeuge sehr wichtig. Völlig neue Gassackkonstruktionen erhöhen nämlich den zeitlichen und kostenmäßigen Aufwand zur Optimierung der Abstimmung von Gassack zu Innenraum erheblich.

Diese Aufgabe wird durch einen Gassack der eingangs genannten Art erreicht, bei dem die miteinander verbundenen Ränder der Seitenabschnitte der oberen und/oder unteren Wand nicht linear verlaufen.

Durch die Zweiteilung der oberen und/oder unteren Wand und den nicht linearen Verlauf kann die Geometrie der oberen und unteren Wand sehr einfach und wirksam verändert werden, um die Gassackform an den Innenraum anzupassen. Bei der US 2002/0020998 A1 verlaufen die Ränder der Seitenabschnitte linear. Will man hingegen die Geometrie der oberen und unteren Wand und damit die Gassackform in diesen Bereichen ändern, so ist dies nicht bzw. nur sehr eingeschränkt möglich.

Die miteinander verbundenen Ränder der Seitenabschnitte verlaufen beispielsweise nach außen bogenförmig, sodass sich eine Wölbung ergibt. Der Gassack bekommt dadurch an seiner oberen und/oder unteren Wand eine nach außen gerichtete Ausbauchung. Mit dieser Ausbauchung ist es möglich, dass die obere und/oder untere Wand nicht, in Seitenansicht des aufgeblasenen Gassacks betrachtet, geradlinig verläuft, sondern eine Art Knick bekommt, durch die sich der Gassack an die Instrumententafelkontur anpassen kann. Dadurch wird die Ausbauchung zu einer Art unmittelbarer Abstützfläche an der Instrumententafel. Das entsprechende Gassackvolumen verringert einen Hohlraum zwischen den Oberschenkeln des Durchschnittsinsassen und dem vertikalen Abschnitt der Instrumententafel, der bei bisherigen Gassäcken kaum ausgefüllt war. Das führte dazu, dass im Rückhaltefall beim Aufprall des Insassen auf den Gassack dieser Raum erst einmal dadurch ausgefüllt wurde, dass der Gassack in ihn hineingedrückt wurde, bevor er sich an dem weitgehend vertikal verlaufenden Abschnitt der Instrumententafel abstützen konnte.

Wenn im Folgenden vom "Durchschnittsinsassen" die Rede ist, so handelt es sich um einen genormten so genannten 50-Prozent-Dummy.

Die Ausbauchung ist gemäß einer weiteren Ausführungsform insbesondere so gelegen, dass sie sich an die Oberschenkel des Durchschnittsinsassen anlegt.

Beim erfindungsgemäßen Gassack handelt es sich insbesondere um einen großvolumigen Gassack, also nicht um einen Knie- oder Seitengassack, sondern um einen Gassack mit großem Volumen zwischen 70 und 130 Litern, vorzugsweise 110 Litern.

Die Seitenwände sind vorzugsweise nahtfrei ausgeführt. Das bedeutet, die Seitenwände bestehen aus einem einzelnen Gewebeabschnitt oder Gewebeteil.

Ein "Gewebeteil" ist ein separates, zugeschnittenes, einstückiges Gewebeteil, wogegen ein "Gewebeabschnitt" entweder ein komplettes Gewebeteil ist oder ein Abschnitt eines Gewebeteils.

Im Inneren des Gassacks im Bereich des Einblasmundes ist bei Beifahrergassäcken vorzugsweise eine so genannte Gasumlenkeinrichtung vorgesehen. Eine solche Gasumlenkeinrichtung ist insbesondere ein separater Gewebestreifen, der wie eine Rolle um den Gasgenerator herum verläuft und der vom Gasgenerator unmittelbar angeblasen wird. Die Geweberolle ist seitlich offen, sodass das Gas zur Seite abgelenkt wird. Diese Ausführungsform ist besonders vorteilhaft im Zusammenhang mit nahtfreien Seitenwänden, denn dann sind keine Nähte im Bereich der Seitenwände mehr vorhanden, die unmittelbar mit heißem Gas angeströmt werden.

Jede Seitenwand samt ihrer angrenzenden oberen und unteren Seitenabschnitte ist vorzugsweise als einstückiger Gewebeabschnitt, insbesondere auch als einstückiges, separates Gewebeteil ausgeführt.

Der einstückige Gewebeabschnitt verläuft konisch zum zugeordneten Abschnitt des Einblasmundrandes zu. Der Einblasmundrand wird aus mehreren, genauer gesagt aus zwei Hälften zusammengesetzt. Zu dieser Einblasmundrandhälfte, die durch den einstückigen Gewebeabschnitt definiert ist, läuft dieser konisch zu.

Bevorzugt ist der Einblasmundrand, genauer gesagt die Hälfte des Einblasmundrandes, die dem Gewebeabschnitt zugeordnet ist, durch eine V-förmige Einbuchtung im Gewebeabschnitt gebildet.

Im Zuschnitt des Gassacks betrachtet können diejenigen Ränder eines Seitenabschnitts, die an einem oberen und unteren Rand der Frontwand befestigt werden, sowie die mit dem jeweils gegenüberliegenden Seitenabschnitt zu verbindenden Ränder dieses (zuerst genannten) Seitenabschnitts unter Bildung eines Dreiecks konisch aufeinander zulaufen. Auch hier ergibt sich gegebenenfalls ein Dreieck im weitesten Sinne.

Dieses Dreieck kann auch als separates Gewebeteil ausgeführt sein oder als Abschnitt des Gewebeteils.

Eine Ausführungsform der Erfindung sieht vor, dass der Gassack aus einem einstückigen Gewebeteil besteht, d.h. eine einstückig zusammenhängende Gewebelage.

Wenn man den erfindungsgemäßen Gassack aus mehreren Teilen zusammensetzt, kann ein geringerer Gewebeverschnitt realisiert werden.

Im Zuschnitt des Gassacks betrachtet hat das oder die Gewebeteile eine zentrische Symmetrieachse. Wenn mehrere Gewebeteile zusammen den Gassackzuschnitt bilden, sollten diese aneinandergelegt werden, und zwar in der Position, in der die Gassackmundrandabschnitte die seitlichen äußersten Abschnitte bilden und der zentrale Abschnitt zur Bildung der Frontwand die seitlichen Gewebeteile berührt.

Im Zuschnitt des Gassacks betrachtet hat der Gassack einen zentrischen Gewebeabschnitt zur Bildung der Vorderwand und zwei entgegengesetzt zu den Einblasmundrändern verlaufende äußere Gewebeabschnitte (oder Gewebeteile), die vom zentrischen Gewebeabschnitt ausgehend zuerst schräg nach oben und unten zu obersten und untersten Eckpunkten und von diesen aus schräg nach außen und einwärts zu den Einblasmundrändern verläuft. Es ergibt sich eine Art Fledermauskontur mit einem zentrischen Körper, der in Axialrichtung kürzer als die "Flügel" ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf den Zuschnitt eines Gassacks, hier einen Gassack mit einem einzigen Gewebeteil,
- Figuren 2 bis 4 verschiedene Ausführungsformen des Zuschnitts eines Gassacks, ausgehend von der Ausführungsform nach Figur 1,
- Figur 5 einen Zuschnitt eines Gassacks mit einer anderen Außengeometrie, hier als Gassack mit einem einzigen Gewebeteil,
- Figuren 6 bis 8 verschiedene Varianten des Zuschnitts des Gassacks nach Figur 5 bei mehrteiligem Zuschnitt,
- Figur 9 einen Zuschnitt eines erfindungsgemäßen Gassacks, hier als Gassack mit einem einstückigen Gewebeteil,
- Figur 10 eine Variante des Zuschnitts des Gassacks nach Figur 9, hier mit mehreren Gewebeteilen,
- Figur 11 eine erste Übersicht über verschiedene Optionen des Zuschnitts eines Gassacks,
- Figur 12 eine Seitenansicht des erfindungsgemäßen Gassacks nach Figur 9 in aufgeblasenem Zustand mit einem 50-Prozent-Dummy,
- Figur 13 eine perspektivische Ansicht eines erfindungsgemäßen Gassacks im aufgeblasenen Zustand mit Armaturentafel,
- Figur 14 eine weitere Variante des Zuschnitts des Gassacks nach Figur 9, hier mit zwei Gewebeteilen, und
- Figur 15 einen Zuschnitt eines erfindungsgemäßen Gassacks gemäß einer weiteren Ausführungsform, hier als Gassack mit vier Gewebeteilen,
- Figuren 16-1 und 16-2 eine zweite Übersicht über verschiedene Optionen des Zuschnittes eines Gassackes mit Zuschnittsvarianten 16a bis 16l.

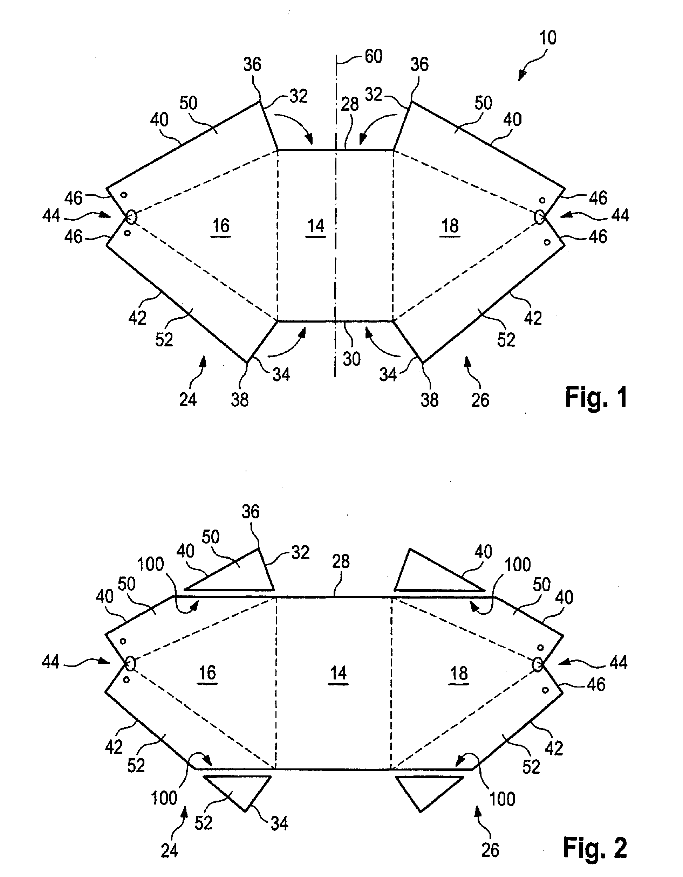

Die Figuren 1-8, 11 und 16a-d zeigen einen linearen Verlauf der Ränder der Seitenabschnitte der oberen und der unteren Wand. Diese Ausführungsbeispiele sind nicht erfindungsgemäß, sie dienen nur zur Erläuterung. In Figur 1 ist der Zuschnitt eines so genannten zwei-dimensionalen Gassacks für einen Beifahrer gezeigt, wobei der Gassack in der Armaturentafel untergebracht wird und für einen Frontalaufprall ausgelegt ist.

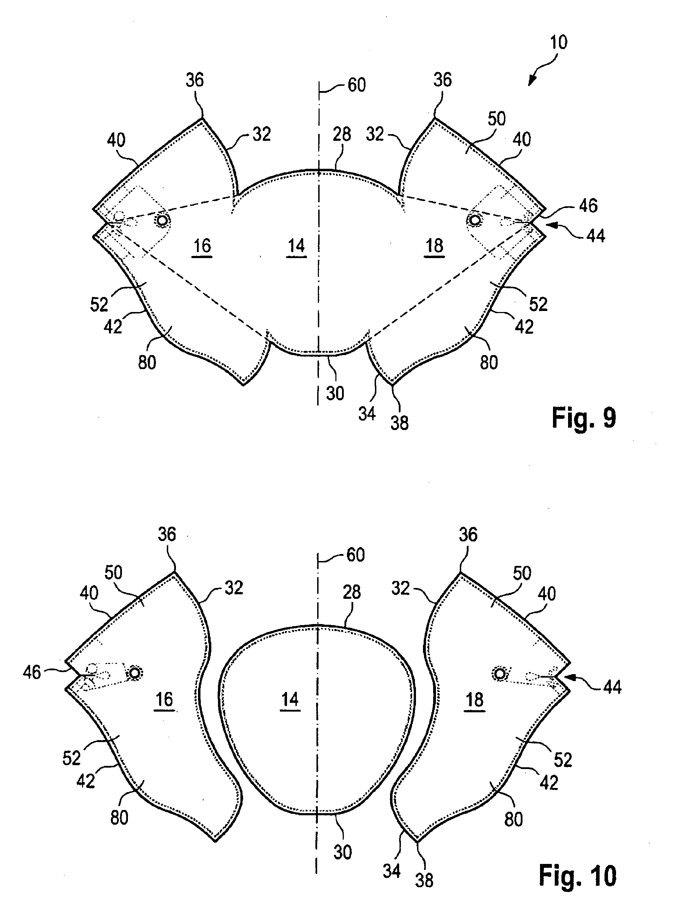

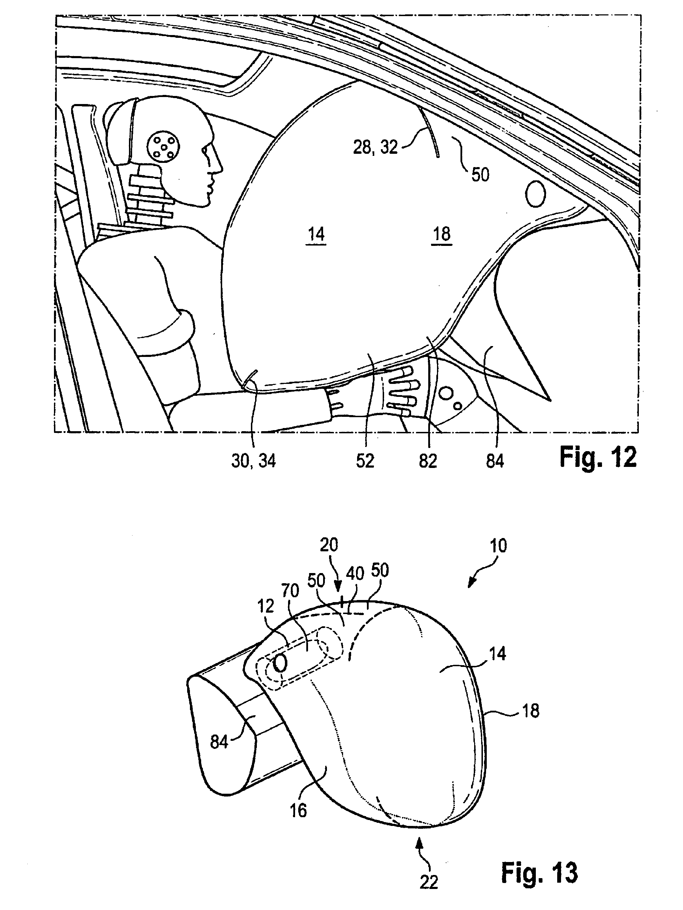

Der Gassack ist in der vorliegenden Ausführungsform aus einem einzigen Gewebeteil gebildet, dessen Ränder durch einfaches Falten aufeinander gelegt und miteinander verbunden werden, wie im Folgenden noch näher ausgeführt wird. In den Figuren 12 und 13 ist der Gassack nach Figur 9 dargestellt, der sich geringfügig gegenüber dem nach Figur 1 unterscheidet, wobei zu Erläuterungszwecken zuerst einmal der Gassack nach Figur 13 beschrieben wird, um das Verständnis über die Gewebeabschnitte und Gewebeteile zu erhalten.

Der Gassack 10 weist einen rückseitigen Einblasmund 12 auf sowie eine entgegengesetzte Vorderwand 14, auf die der Insasse aufprallt. Darüber hinaus sind zwei gegenüberliegende Seitenwände 16, 18 vorgesehen, die in eine obere Wand 20 und eine untere Wand 22 übergehen.

Diese vorgenannten Wände werden durch das einstückige Gewebeteil nach Figur 1 gebildet. Die Vorderwand 14 ist gemäß Figur 1 ein zentrischer Gewebeabschnitt, der einstückig mit einem linken und einem rechten größeren Gewebeabschnitt 24, 26 verbunden ist.

Der linke Gewebeabschnitt 24 und der rechte Gewebeabschnitt 26 dienen zur Ausbildung aller übrigen vorerwähnten Wände. Vom oberen Rand 28 und vom unteren Rand 30 der Vorderwand 14 aus verläuft der Zuschnitt und damit das Gewebematerial zuerst längs der Ränder 32, 34 nach oben bzw. unten und seitlich schräg nach außen zu obersten und untersten Eckpunkten 36, 38 und von diesen aus schräg nach außen und einwärts längs der Ränder 40, 42 zu einer V-förmigen Einbuchtung 44, deren Ränder 46 den Einblasmund 12 definieren. Jede V-förmige Einbuchtung 44 bildet dabei mit ihrem Rand 46 eine Hälfte des Einblasmundrandes.

Im Folgenden werden die beiden Gewebeabschnitte 24, 26 noch einmal genauer in diejenigen Abschnitte unterteilt, die für die Bestimmung der einzelnen Wände verantwortlich sind. Die obere und untere Wand 20, 22 werden jeweils durch zwei Abschnitte 50, 52 definiert. Die oberen Abschnitte 50 (auf jedem Gewebeabschnitt 24, 26 liegt ein Abschnitt 50) werden an den Rändern 40 miteinander vernäht (siehe Figur 13), ebenso die Abschnitte 52 längs der Ränder 42. Durch einfaches Falten liegen die Ränder 40, 42 übereinander.

Die entsprechenden Nähte längs der Ränder 40, 42 verlaufen dann, wie in Figur 13 zu sehen ist, im Wesentlichen mittig in Fahrzeuglängsrichtung von der Vorderwand in Richtung zu dem Einblasmund.

Zwischen den grob gesagt trapezförmigen Seitenabschnitten 50, 52 eines Gewebeabschnitts 24, 26 ist ein Gewebeabschnitt vorgesehen, der die Seitenwände 16, 18 definiert und bildet. Die einzelnen Abschnitte sind durch unterbrochene Linien zur besseren Erklärung in Figur 1 voneinander getrennt.

Die Herstellung des Gassacks nach Figur 1 wird im Folgenden erläutert. Zuerst wird der Zuschnitt, d.h. das Gewebeteil, längs einer Mittelachse, die gleichzeitig eine Symmetrieachse 60 bildet, zusammengeklappt und längs der Ränder 40, 42 miteinander verbunden, z.B. vernäht, verklebt oder verschweißt. Anschließend werden die Ränder 32 in Pfeilrichtung nach innen geklappt (erneut durch eine einfache Faltung realisierbar), sodass sie in den entsprechenden Abschnitten des oberen Randes 28 des zentralen Abschnitts zu liegen kommen und mit diesem Randabschnitt 28 verbunden werden. Das Gleiche erfolgt mit den Rändern 34 und dem Rand 30.

Wie in Figur 1 gut zu erkennen ist, haben die Seitenwände 16, 18 eine Art Dreiecks-Form, wobei aber zu betonen ist, dass der im aufgeblasenen Zustand entstehende Keil (in Seitenansicht gesehen) stark gewölbt ist, sodass sich eine Art Tropfenform ergibt.

Die Seitenwände 16, 18 sind nahtfrei ausgeführt. Im Inneren des Gassacks ist eine röhrenförmige Gasumlenkeinrichtung 70 (röhrenförmige Gewebelage) vorgesehen (Figur 13), die einen Gasgenerator umgibt und die das einströmende Gas seitlich nach außen lenkt. Durch die Umlenkung in Richtung der Seitenwände 16, 18 werden diese unmittelbar mit heißem Gas angeströmt. Da keine Nähte in diesem Bereich vorgesehen sind, ist auch kein zusätzlicher Aufwand für einen thermischen Schutz notwendig.

Die Ausführungsformen nach Figuren 2 bis 4 entsprechen im Wesentlichen der Ausführungsform nach Figur 1, sodass im Folgenden nur noch auf die Unterschiede eingegangen werden muss.

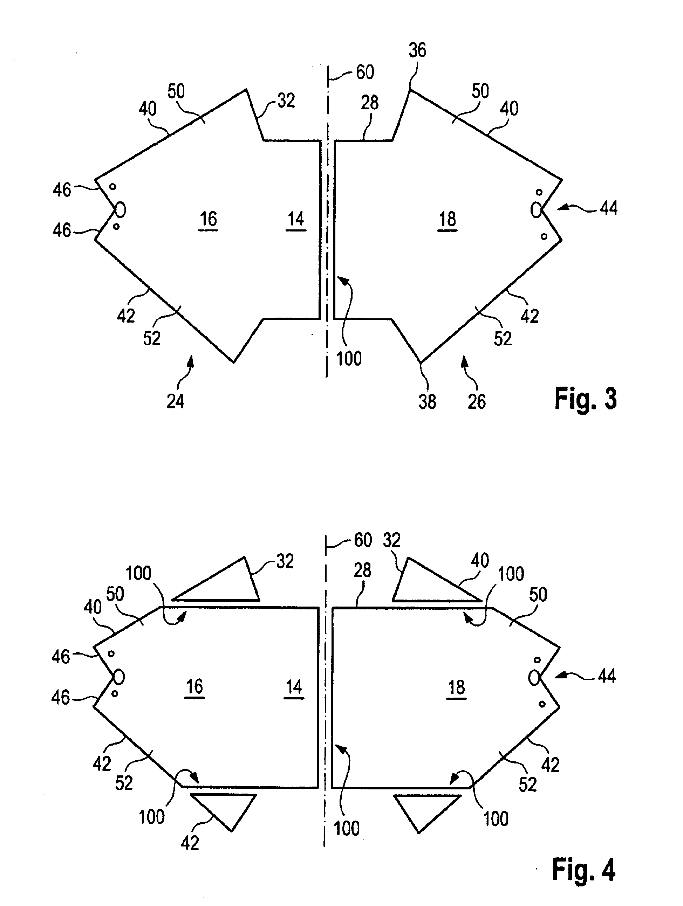

Bei Figur 3 ist nicht ein einziges Gewebeteil zur Bildung des Gassacks vorgesehen, sondern fünf Gewebeteile, die zuerst einmal miteinander vernäht werden (siehe Pfeil mit Naht 100), bevor diejenigen Nähte erzeugt werden, die im Zusammenhang mit Figur 1 bereits beschrieben wurden.

Bei Figur 2 sind die oberen Ecken der Seitenabschnitte 50, 52 als separate Teile ausgeführt. Dies hat Vorteile bezüglich des Zuschnitts des Gassacks, um möglichst geringen Gewebeverbrauch und hohe Gewebeausbeute zu erzielen.

Bei Figur 3 gibt es zwei Gewebeteile, die längs einer Naht 100 zuerst miteinander verbunden werden, bevor die im Zusammenhang mit Figur 1 beschriebenen Nähte erzeugt werden. Die Trennlinie zwischen den Gewebeteilen verläuft längs der Symmetrieachse 60.

Figur 4 ist eine Kombination der Zuschnitte von Figuren 2 und 3, wobei hier insgesamt sechs Gewebeteile zuerst zusammengesetzt werden, sodass sich ein Gewebeteil gemäß Figur 1 ergibt, bevor die zuvor erwähnten Nähte längs der Ränder erzeugt werden.

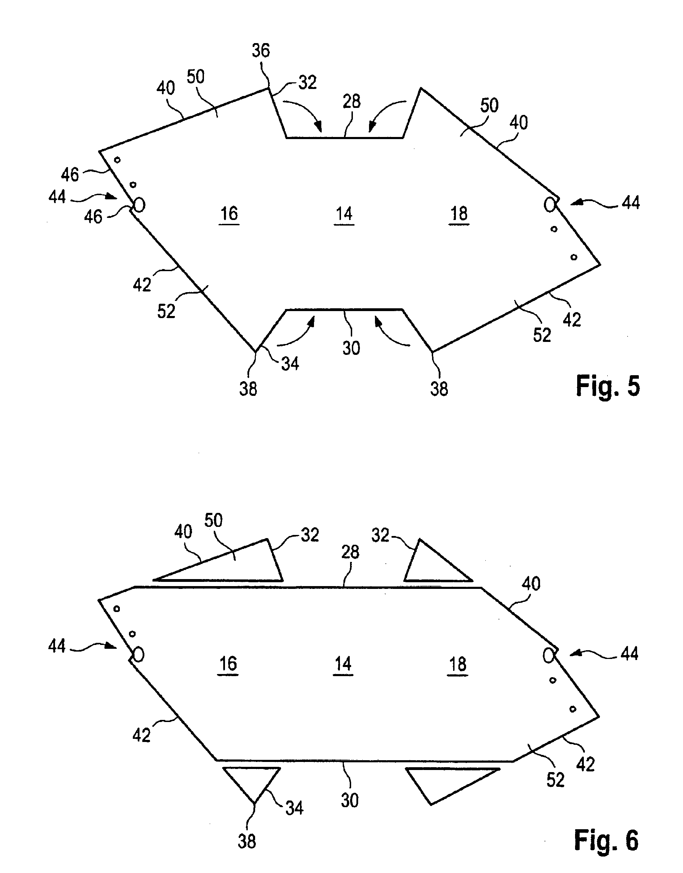

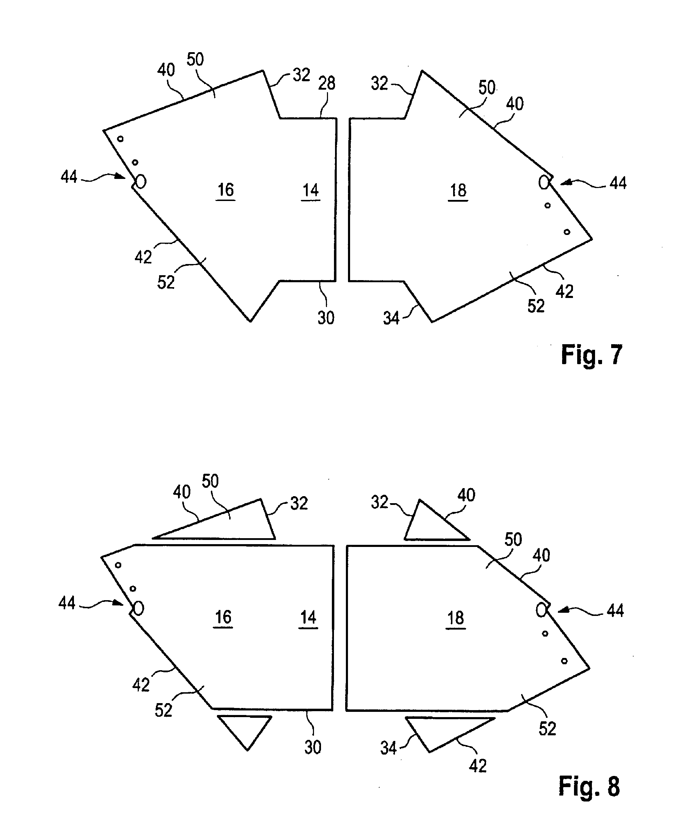

Die Ausführungsformen nach Figuren 5 und 8 entsprechen im Wesentlichen denen nach den Figuren 1 bis 4, hier ist nur ein etwas anderer Gewebezuschnitt im Bereich der Seitenabschnitte 50, 52 und des Einblasmundes 12 im Bereich der Einbuchtungen 44 vorgesehen.

Die einander entsprechenden Abschnitte und Ränder sind aber mit denselben, bereits eingeführten Bezugszeichen versehen, sodass im Detail nicht mehr explizit darauf eingegangen werden muss.

Die Varianten 6 bis 8 sind dann die entsprechend zu den Figuren 2 bis 4 ausgeführten, mehrteiligen Varianten.

Während in den Figuren 1 bis 8 die Ränder linear verliefen, insbesondere die Ränder 40, 42 der Seitenabschnitte 50, sind bei der Ausführungsform nach Figur 9 diese Ränder 40, 42 mit einer leichten bogenförmigen Wölbung nach außen ausgeführt, sodass hier zusätzliches Material zur Verfügung steht. Auch die Ränder 28, 30 der Vorderwand 14 sowie die Ränder 32, 34, welche an diesen Rändern 28, 30 angebracht werden, laufen bogenförmig nach außen, sodass sich nach außen gerichtete Ausbauchungen im aufgeblasenen Zustand bilden.

Damit erhält der Gassack eine rundere Geometrie. Insbesondere die Wölbungen 80 an den Rändern 42 führen dazu, dass der Gassack im aufgeblasenen Zustand eine Art Ausbauchung 82 oder Absatz erhält (siehe Figur 12), die sich unmittelbar an den vorderen Teil der Instrumententafel 84 anschließt. Diese Ausbauchung 82 führt dazu, dass, in Seitenansicht des aufgeblasenen Gassacks gesehen, ein Leerraum zwischen der Instrumententafel 84 und den Oberschenkeln des Durchschnittsinsassen (50-Prozent-Dummy) ausgefüllt wird.

Die Ausbauchung 82 füllt somit ein Dreieck, welches sich in Seitenansicht zwischen Vorderseite der Instrumententafel 84 und den Oberschenkeln aufspannt, weitgehend aus.

Die Ausbauchung 82 führt auch dazu, dass sich der Gassack an die Oberschenkel des Durchschnittsinsassen anlegt, sodass sich ein weitgehend horizontaler unterer Wandabschnitt ergibt.

Die vorgenannte Stufe ergibt sich durch diesen horizontalen Wandabschnitt, der sich an die Oberschenkel anlegt, und einen schräg aufwärts verlaufenden Abschnitt (siehe Figur 12), der sich an der Instrumententafel vorderseitig abstützt.

Der in Figur 12 gezeigte Gassack ist im Übrigen mit einem sehr hohen Füllvolumen zwischen 70 und 130 Litern ausgestattet, vorzugsweise 110 Liter.

Bei der Ausführungsform nach Figur 10 ist der Gassack aus drei Gewebeteilen zusammengesetzt, nämlich einem zentralen Gewebeteil, das die Vorderwand 14 bildet, sowie einem linken und einem rechten Gewebeteil, das die Seitenwände 16, 18 sowie die obere und untere Wand 20, 22 bildet. Die Vorderwand 14 ist bei dieser Ausführungsform im Wesentlichen kreisförmig ausgeführt, und die übrigen Wände sind flügelartig an diese angesetzt.

Zuerst werden hier die zwei Seitenteile an die Vorderwand 14 angenäht, bevor die zuvor erwähnten übrigen Ränder miteinander vernäht werden.

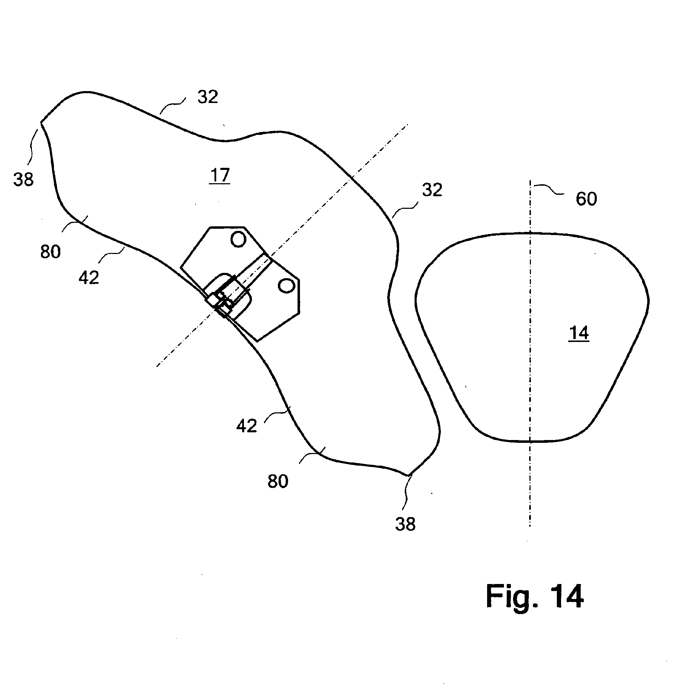

Bei der Ausführungsform nach Figur 14 ist der Gassack aus zwei Gewebeteilen zusammengesetzt, nämlich einem zentralen Gewebeteil, das die Vorderwand 14 bildet, sowie einem Gewebeteil, das die Seitenwände 16 und 18 sowie die obere und untere Wand 20, 22 einstückig bildet. Dieses einstückige Gewebeteil 17 ist in dem hier dargestellten Beispiel entlang der Symmetrieachse 60 gespiegelt, d.h. die beiden Seitenwände 16 und 18 gemäß der Ausführungsform nach Figur 10 sind hier zu einem einzelnen Gewebeteil zusammengesetzt. Die Symmetrieachse 60 entspricht hier ausgehend vom Einblasmund dem Verlauf der beiden Ränder 40 der nunmehr einstückig ausgebildeten oberen Wand 20. Die untere Wand wird nach wie vor durch Verbinden der beiden Ränder 42 gebildet. Wölbungen 80 an den Rändern 42 führen auch hier dazu, dass der Gassack im aufgeblasenen Zustand eine Ausbauchung erhält. Die beiden Ränder werden übereinander liegend zwischen der Symmetrieachse 60 und den Eckpunkten 38 vernäht. Das so entstehende trichter- oder konusförmige Zwischenbauteil wird dann mit dem Rand des Vorderteils 14 vernäht.

Im Gegensatz zu dem hier dargestellten Ausführungsbeispiel kann auch die Symmetrieachse auch durch die untere Wand verlaufen und die obere Wand wird durch Vernähen von zwei Rändern erstellt.

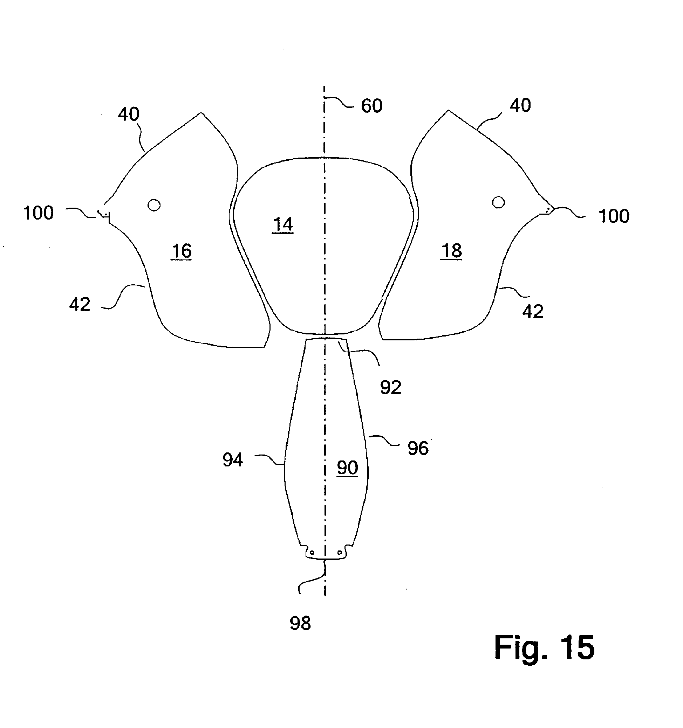

Die Ausführungsform nach Figur 15 entspricht weitgehend der Ausführungsform nach Figur 10 mit dem Unterschied, dass ein zusätzliches viertes Gewebestück 90 in die untere Wand 22 eingesetzt ist. Das langgestreckte Gewebestück 90 wird mit seiner schmalen Stirnseite 92 mit dem unteren Rand 30 der Vorderwand 14 vernäht. Die beiden langen Seitenabschnitte 94 und 96 werden mit den Rändern 42 der beiden Seitenwände 16 und 18 vernäht. Die zweite schmale Stirnseite 98 bildet zusammen mit den Übergangsabschnitten 100 der Ränder 40 und 42 der beiden Seitenwände den Rand des Einblasmundes 12.

Bei den Ausführungsformen nach den Figuren 1, 3, 5, 7, 9 und 10 wird die jeweilige Seitenwand 16 oder 18 zusammen mit dem Seitenabschnitt 50, 52, der an sie oben und unten angrenzt und einen Abschnitt der oberen und unteren Wand 20, 22 bildet, einstückig ausgeführt, d.h. aus einem einzigen Gewebeteil oder Gewebeabschnitt.

Bei allen Ausführungsformen ist der Zuschnitt des Gassacks so, dass der Gewebeabschnitt, der eine Seitenwand 16, 18 und den angrenzenden oberen und unteren Seitenabschnitt 50, 52 bildet, zum Einblasmundrand 46 hin konisch zuläuft.

Auch die Ränder 40, 32 sowie 42 und 34 laufen nach oben oder nach unten aufeinander zu. Hier kann ein Dreieck gebildet werden, das als separates Gewebeteil ausgeführt ist, wie in den Figuren 2, 4, 6 und 8 dargestellt.

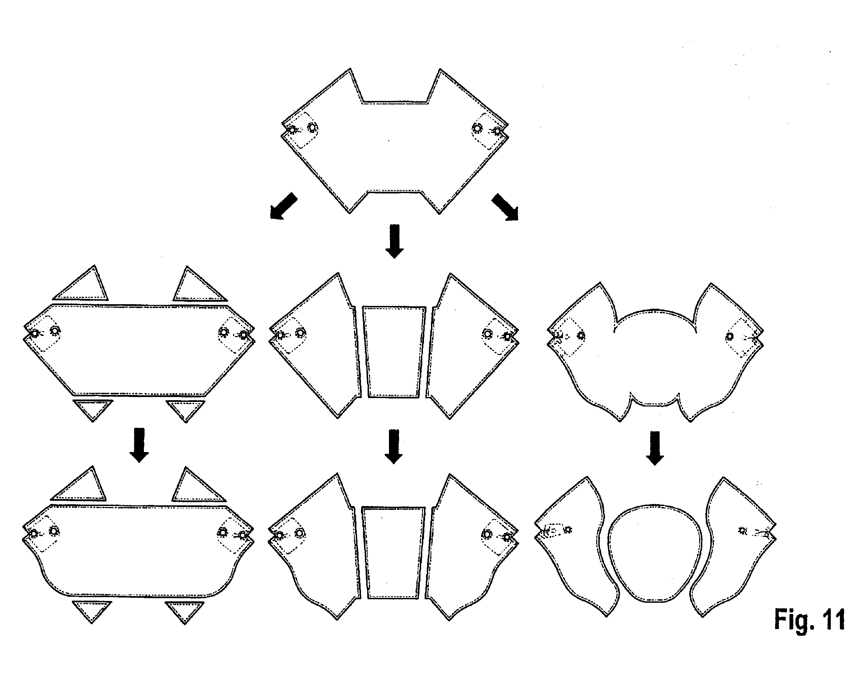

Figur 11 zeigt verschiedene Varianten des Zuschnitts des erfindungsgemäßen Gassacks.

Durch die mehrteilige Ausführung lässt sich Gewebematerial sparen, dafür müssen natürlich mehr Nähte vorgesehen werden.

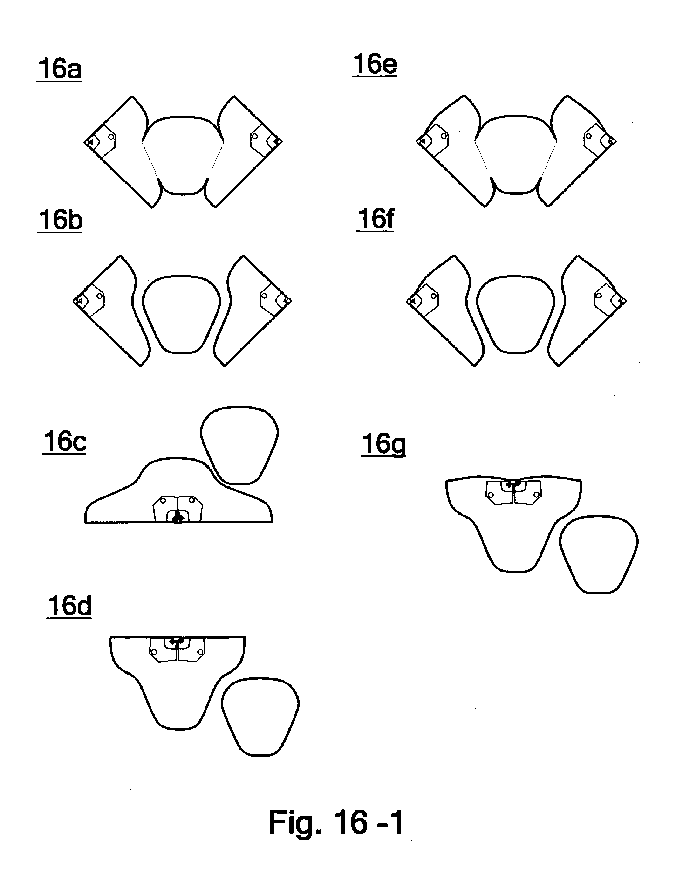

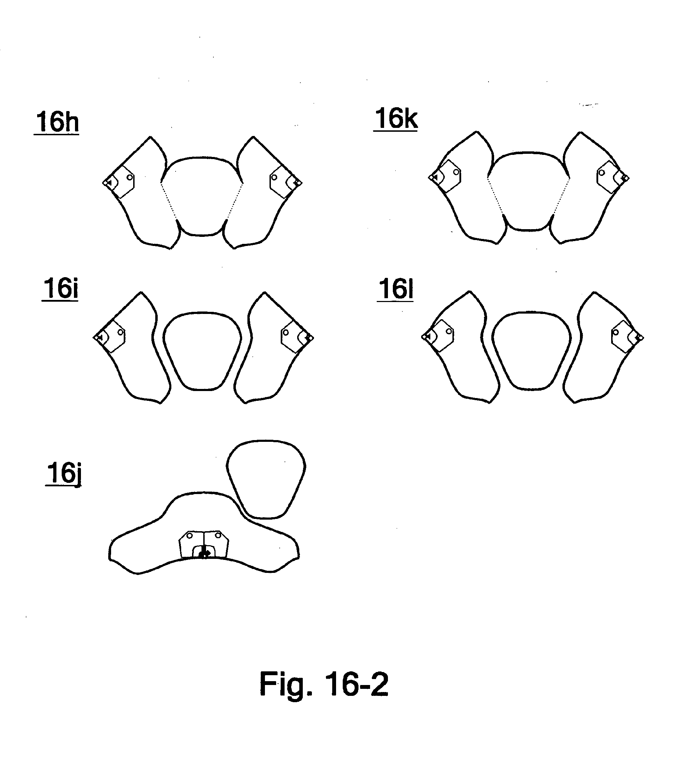

Aufeinander aufbauende bzw. voneinander abgeleitete ein-, drei- bzw. zweiteilige Ausbildungen des Gewebezuschnittes für quasi-identische Gassäcke sind in den Figuren 16-1 und 16-2 in den Unterfiguren 16a bis 16l dargestellt. Die jeweils untereinander angeordneten Unterfiguren 16a bis 16d, 16e bis 16g, 16h bis 16j und 16k bis 16l stellen dabei jeweils die verwandten Zuschnittsvarianten eines quasi-identischen Gassackes dar.

Im Fall der Unterfiguren 16a bis 16d ist der zweiteilige Zuschnitt so ausgelegt, dass die obere Wand (Unterfigur 16c) oder die untere Wand (Unterfigur 16d) einstückig ausgebildet ist. Die beiden Abschnitte der oberen und unteren Wand haben hier im ein- bzw. dreiteiligen Zuschnitt, wie in den Unterfiguren 16a und 16b ersichtlich, im Wesentlichen geradlinig verlaufende Ränder.

Im Fall der Zuschnittsvarianten nach den Unterfiguren 16e bis 16g ist die untere Wand bei der zweiteiligen Ausführung gemäß Unterfigur 16g einstückig ausgebildet. Die beiden Abschnitte der unteren Wand haben hier im ein- bzw. dreiteiligen Zuschnitt, wie in den Unterfiguren 16e und 16f ersichtlich, im Wesentlichen geradlinig verlaufende Ränder. Die zu verbindenden Ränder der oberen Wand sind gekrümmt ausgeführt, so dass hier im vernähten Zustand eine Ausbauchung entsteht.

Bei der Zuschnittsabfolge nach den Unterfiguren 16h bis 16j hat die obere Wand bei der ein- und dreiteiligen Ausführung geradlinig zu verbindende Ränder, die im Fall des zweiteiligen Zuschnittes gemäß Unterfigur 16j entfallen bzw. webtechnisch erstellt sind. In der unteren Wand ist nach Fertigstellung des Gassacks eine Ausbauchung ausgebildet.

Bei der Gassackvariante gemäß den Unterfiguren 16k und 16j haben sowohl die obere als auch die untere Wand eine Ausbauchung. Hier sind die zu verbindenden Ränder nicht geradlinig sondern verlaufen mit entsprechender Krümmung. Eine zweiteilige Zuschnittsvariante analog zu den vorherigen Ausführungsbeispielen besteht daher nicht.

## Patentansprüche

1. Gassack, insbesondere Beifahrer-Gassack, mit einem rückseitigen Einblasmund (12), einer Vorderwand (14) zum Aufprall des Insassen, zwei gegenüberliegenden Seitenwänden (16, 18) sowie einer oberen und einer unteren Wand (20, 22), wobei die obere und/oder die untere Wand (20, 22) jeweils zweigeteilt sind und aus nebeneinander liegenden, längs gegenüberliegender Ränder (40, 42) miteinander verbundenen Seitenabschnitten (50, 52) besteht, **dadurch gekennzeichnet, dass** die miteinander verbundenen Ränder (40, 42) der Seitenabschnitte (50, 52) der oberen und/oder unteren Wand (20, 22) nicht linear verlaufen.

2. Gassack nach Anspruch 1, **dadurch gekennzeichnet, dass** die miteinander verbundenen Ränder (40, 42) eines Seitenabschnitts (50, 52) eine nach außen verlaufende Wölbung (80) haben und der Gassack an seiner oberen und/oder unteren Wand (20, 22) eine nach außen gerichteten Ausbauchung (82) hat.

3. Gassack nach Anspruch 2, **dadurch gekennzeichnet, dass** die Ausbauchung (82) so gelegen ist, dass sie sich an die Oberschenkel des Durchschnittsinsassen anlegt.

4. Gassack nach einem der vorhergehenden Ansprüche, **dadurch gekennzeichnet, dass** er ein Füllvolumen zwischen 70 und 130 Litern, vorzugsweise von 110 Liter, aufweist.

5. Gassack nach einem der vorhergehenden Ansprüche, **dadurch gekennzeichnet, dass** die Seitenwände (16, 18) nahtfrei ausgeführt sind.

6. Gassack nach einem der vorhergehenden Ansprüche, **dadurch gekennzeichnet, dass** im Inneren des Gassacks im Bereich des Einblasmundes (12) eine Gasumlenkeinrichtung vorgesehen ist, welche eingeblasenes Gas seitlich zu den Seitenwänden (16, 18) lenkt.

7. Gassack nach einem der vorhergehenden Ansprüche, **dadurch gekennzeichnet, dass** jede Seitenwand (16, 18) und angrenzende obere und untere Seitenabschnitte (50, 52) der oberen und unteren Wand (20, 22) aus einem einstückigen Gewebeabschnitt besteht.

8. Gassack nach Anspruch 7, **dadurch gekennzeichnet, dass** jeder Gewebeabschnitt aus Seitenabschnitten (50, 52) der oberen und unteren Wand (20, 22) sowie der zugeordneten Seitenwand (16, 18) aus einem separaten Gewebeteil gebildet ist.

9. Gassack nach einem der vorhergehenden Ansprüche, **dadurch gekennzeichnet, dass** die obere oder untere Wand (20, 22) aus einem einstückigen Gewebeabschnitt besteht.

10. Gassack nach Anspruch 9, **dadurch gekennzeichnet, dass** die obere und untere Wand (20, 22) sowie die Seitenwände (16, 18) aus einem einstückigen Gewebeteil (17) gebildet sind.

11. Gassack nach einem der vorhergehenden Ansprüche, **dadurch gekennzeichnet, dass** die Vorderwand (14) aus einem separaten Gewebeteil gebildet ist.

12. Gassack nach einem der vorhergehenden Ansprüche, **dadurch gekennzeichnet, dass** der die Vorderwand (14) bildende Gewebeabschnitt einen oberen und/oder unteren, nach außen geschwungen verlaufenden Rand (28, 30) aufweist.

13. Gassack nach Anspruch 10, **dadurch gekennzeichnet, dass**, im Zuschnitt des Gassacks betrachtet, die Seitenabschnitte (50, 52) der oberen und/oder unteren Wand (20, 22) einen Rand (32, 34) besitzen, der an einen oberen und unteren Rand (28, 30) der Vorderwand (14) angebracht wird, wobei der Rand (32, 34) der Seitenabschnitte (50, 52) vorzugsweise nach außen geschwungen und bogenförmig verläuft.

14. Gassack nach einem der vorhergehenden Ansprüche, **dadurch gekennzeichnet, dass**, im Zuschnitt des Gassacks betrachtet, der einstückige Gewebeabschnitt, der eine Seitenwand (16, 18) und einen angrenzenden oberen und einen unteren Seitenabschnitt (50, 52) der oberen und unteren Wand (20, 22) bildet, zum Einblasmundrand (46) konisch zuläuft.

15. Gassack nach Anspruch 12, **dadurch gekennzeichnet, dass** der Abschnitt des Einblasmundrandes (46) an einem Gewebeabschnitt durch eine V-förmige Einbuchtung (44), im Zuschnitt des Gassacks betrachtet, gebildet ist.

16. Gassack nach einem der vorhergehenden Ansprüche, **dadurch gekennzeichnet, dass**, im Zuschnitt des Gassacks betrachtet, die Ränder (32, 34) eines Seitenabschnitts (50, 52) der oberen und/oder unteren Wand (20, 22), die an dem oberen und unteren Rand (28, 30) der Vorderwand (14) angebracht werden, und die mit dem gegenüberliegenden Seitenabschnitt (50, 52) zu verbindenden Ränder (40, 42) dieses Seitenabschnitts (50, 52), vorzugsweise unter Bildung eines Dreiecks, konisch aufeinander zulaufen:

17. Gassack nach Anspruch 14, **dadurch gekennzeichnet, dass** das Dreieck als separates Gewebeteil ausgeführt ist.

18. Gassack nach einem der vorhergehenden Ansprüche, **dadurch gekennzeichnet, dass** er aus einem einstückigen Gewebeteil besteht.

19. Gassack nach einem der vorhergehenden Ansprüche, **dadurch gekennzeichnet, dass**, im Zuschnitt des Gassacks betrachtet, das oder die Gewebeteile eine zentrische Symmetrieachse (60) aufweisen.

20. Gassack nach einem der vorhergehenden Ansprüche, **dadurch gekennzeichnet, dass**, im Zuschnitt des Gassacks betrachtet, das oder die Gewebeteile einen zentrischen Gewebeabschnitt zur Bildung der Vorderwand (14) und zwei entgegengesetzt zu den zugeordneten Abschnitten des Einblasmundrandes (46) verlaufende äußere Gewebeabschnitte (24, 26) aufweist, die vom zentralen Gewebeabschnitt ausgehend zuerst schräg nach oben und unten zu obersten und untersten Eckpunkten (36, 38) und von diesen aus schräg nach außen sowie einwärts zu den zugeordneten Abschnitten des Einblasmundrandes (46) verläuft.

## Claims

1. An airbag, especially a passenger airbag, comprising a rear-side inflating mouth (12), a front wall (14) for impact of the occupant, two opposed side walls (16, 18) as well as upper and lower walls (20, 22), wherein each of the upper and/or lower wall (20, 22) is split and consists of adjacent side portions (50, 52) interconnected along opposed edges (40, 42), **characterized in that** the interconnected edges (40, 42) of the side portions (50, 52) of the upper and/or lower wall (20, 22) extend in a non-linear way.

2. The airbag according to claim 1, **characterized in that** the interconnected edges (40, 42) of a side portion (50, 52) have an outwardly extending bulge (80) and the airbag has an outwardly directed convexity (82) on its upper and/or lower wall (20, 22).

3. The airbag according to claim 2, **characterized in that** the convexity (82) is located so that it is adjacent to the upper legs of the average occupant.

4. The airbag according to any one of the preceding claims, **characterized in that** it has a filling volume ranging from 70 to 130 liters, preferably of 110 liters.

5. The airbag according to any one of the preceding claims, **characterized in that** the side walls (16, 18) are configured to be seamless.

6. The airbag according to any one of the preceding claims, **characterized in that** inside the airbag in the area of the inflating mouth (12) a gas deflecting means is provided for deflecting inflated gas laterally to the side walls (16, 18).

7. The airbag according to any one of the preceding claims, **characterized in that** each side wall (16, 18) and adjacent upper and lower side portions (50, 52) of the upper and lower walls (20, 22) are made of a one-piece fabric portion.

8. The airbag according to claim 7, **characterized in that** each fabric portion is formed of side portions (50, 52) of the upper and lower wall (20, 22) as well as the associated side wall (16, 18) is formed of a separate fabric part.

9. The airbag according to any one of the preceding claims, **characterized in that** the upper or lower wall (20, 22) consists of a one-piece fabric portion.

10. The airbag according to claim 9, **characterized in that** the upper and lower walls (20, 22) as well as the side walls (16, 18) are formed of a one-piece fabric part (17).

11. The airbag according to any one of the preceding claims, **characterized in that** the front wall (14) is formed of a separate fabric part.

12. The airbag according to any one of the preceding claims, **characterized in that** the fabric portion forming the front wall (14) includes an upper and/or lower edge (28, 30) extending to be outwardly curved.

13. The airbag according to claim 10, **characterized in that**, viewed in the cut of the airbag, the side portions (50, 52) of the upper and/or lower wall (20, 22) have an edge (32, 34) which is arranged on upper and lower edges (28, 30) of the front wall (14), the edge (32, 34) of the side portions (50, 52) preferably extending to be outwardly curved and arc-shaped.

14. The airbag according to any one of the preceding claims, **characterized in that**, viewed in the cut of the airbag, the one-piece fabric portion forming a side wall (16, 18) and an adjacent upper and a lower side portion (50, 52) of the upper and lower walls (20, 22) is tapered toward the inflating mouth edge (46).

15. The airbag according to claim 12, **characterized in that** the portion of the inflating mouth edge (46) is formed on a fabric portion by a V-shaped indentation (44), viewed in the cut of the airbag.

16. The airbag according to any one of the preceding claims, **characterized in that**, viewed in the cut of the airbag, the edges (32, 34) of a side portion (50, 52) of the upper and/or lower wall (20, 22) arranged on the upper and lower edges (28, 30) of the front wall (14) and the edges (40, 42) of said side portion (50, 52) to be connected to the opposite side portion (50, 52) preferably are tapered toward each other while forming a triangle.

17. The airbag according to claim 14, **characterized in that** the triangle is a separate fabric part.

18. The airbag according to any one of the preceding claims, **characterized in that** it is made of a one-piece fabric part.

19. The airbag according to any one of the preceding claims, **characterized in that**, viewed in the cut of the airbag, the fabric part(s) has/have a centric axis of symmetry (60).

20. The airbag according to any one of the preceding claims, **characterized in that**, viewed in the cut of the airbag, the fabric part(s) include(s) a centric fabric portion for forming the front wall (14) and two outer fabric portions (24, 26) extending opposed to the associated portions of the inflating mouth edge (46), which fabric portions extend starting from the central fabric portion first obliquely upwards and downwards to uppermost and lowermost corners (36, 38) and from there obliquely outwardly as well as inwardly to the associated portions of the inflating mouth edge (46).

## Revendications

1. Airbag, en particulier airbag passager, avec une bouche d'admission arrière (12), une paroi avant (14) pour l'impact de l'occupant, deux parois latérales opposées (16, 18) ainsi qu'une paroi supérieure et une paroi inférieure (20, 22), pour lequel la paroi supérieure et/ou la paroi inférieure (20, 22) sont chacune divisées en deux et se composent de sections latérales (50, 52) reliées ensemble disposées l'une à côté de l'autre le long de bords opposés (40, 42), **caractérisé en ce que** les bords reliés (40, 42) des portions latérales (50, 52) de la partie supérieure et/ou la paroi inférieure (20, 22) ne sont pas linéaires.

2. Airbag selon la revendication 1, **caractérisé en ce que** les bords (40, 42) reliés ensemble d'une partie latérale (50, 52) présentent un renflement (80) s'étendant vers l'extérieur et que l'airbag présente sur sa paroi supérieure et/ou inférieure (20, 22) un renflement dirigé vers l'extérieur (82).

3. Airbag selon la revendication 1, **caractérisé en ce que** le renflement (82) est disposé de sorte qu'il repose contre les cuisses de l'occupant moyen.

4. Airbag selon l'une des revendications précédentes, **caractérisé en ce qu'**il possède un volume plein compris entre 70 et 130 litres, de préférence 110 litres.

5. Airbag selon l'une des revendications précédentes, **caractérisé en ce que** les parois latérales (16, 18) sont réalisées sans couture.

6. Airbag selon l'une des revendications précédentes, **caractérisé en ce qu'**un déflecteur de gaz est disposé à l'intérieur du sac dans la zone de la bouche d'admission (12), lequel dirige les gaz injectés latéralement sur les parois latérales (16, 18).

7. Airbag selon l'une des revendications précédentes, **caractérisé en ce que** chaque paroi latérale (16, 18) et les parois inférieures et supérieures adjacentes (50, 52) des parois inférieures et supérieures (20, 22) sont faites d'une pièce unique de tissu.

8. Airbag selon la revendication 7, **caractérisé en ce que** chaque partie de tissu des parties latérales (50, 52) des parois inférieures et supérieures (20, 22) ainsi que les parois latérales associées (16, 18) sont réalisées d'une pièce de tissu séparée.

9. Airbag selon l'une des revendications précédentes, **caractérisé en ce que** les parois inférieures et supérieures (20, 22) sont faites d'une pièce unique de tissu.

10. Airbag selon la revendication 9, **caractérisé en ce que** les parois inférieures et supérieures (20, 22) ainsi que les parois latérales (16, 18) sont réalisées d'une seule pièce de tissu (17).

11. Airbag selon l'une des revendications précédentes, **caractérisé en ce que** la paroi avant (14) est faite d'une pièce de tissu séparée.

12. Airbag selon l'une des revendications précédentes, **caractérisé en ce que** la paroi avant (14) formée d'une pièce de tissu possède des bords (28, 30) inférieurs et/ou supérieurs incurvés et orientés vers l'extérieur.

13. Airbag selon la revendication 10, **caractérisé en ce que**, dans la conception de l'airbag considérée, les parties latérales (50, 52) des parois inférieures et/ou supérieures (20, 22) possède un bord (32, 34), qui est lié aux bords inférieurs et/ou supérieurs (28, 30) de la paroi avant (14), pour lequel les bords (32, 34) des parties latérales (50, 52) s'étendent de préférence incurvés en arc vers l'extérieur.

14. Airbag selon l'une des revendications précédentes, **caractérisé en ce que**, dans la conception de l'airbag considérée, la partie de tissu en une seule pièce, qui offre une paroi latérale (16, 18) et des parties latérales inférieures et supérieures adjacentes (50, 52) des parois inférieures et supérieures (20, 22), s'étend de forme conique jusqu'au bord de la bouche d'admission (46).

15. Airbag selon la revendication 12, **caractérisé en ce que**, la découpe du bord de la bouche d'admission (46) est formée par un évidement en forme de V (44) sur une pièce de tissu, dans la conception de l'airbag considérée.

16. Airbag selon l'une des revendications précédentes, **caractérisé en ce que**, dans la conception de l'airbag considérée, les bords (32, 34) d'une partie latérale (50, 52) des parois inférieures et/ou supérieures (20, 22), qui sont reliés aux bords inférieurs et supérieurs (28, 30) de la paroi avant (14), et qui avec la paroi latérale opposée (50, 52) s'étendent de l'une à l'autre de façon conique pour le raccordement des bords (40, 42) de ces parois latérales (50, 52), de préférence sous la forme d'un triangle.

17. Airbag selon la revendication 14, **caractérisé en ce que** le triangle est réalisé en tant que pièce de tissu séparée.

18. Airbag selon l'une des revendications précédentes, **caractérisé en ce qu'**il se compose d'une pièce unique de tissu.

19. Airbag selon l'une des revendications précédentes, **caractérisé en ce que**, dans la conception de l'airbag considérée, la ou les pièces de tissu possèdent un axe de symétrie central (60).

20. Airbag selon l'une des revendications précédentes, **caractérisé en ce que**, dans la conception de l'airbag considérée, la ou les pièces de tissu possède un pièce de tissu central pour former la paroi avant (14) et deux pièces opposées à la partie correspondante au bord de la bouche d'admission (46), qui à partir de la partie de tissu centrale s'étend d'abord obliquement de haut en bas vers les coins inférieurs et supérieurs (36, 38) et de ces derniers s'étend obliquement vers l'extérieur et vers l'intérieur des parties associées des bords de la bouche d'admission (46).
